# EUROPEAN PATENT APPLICATION

(11) **EP 2 239 538 A1**
(43) Date of publication of application: **13.10.2010**
(21) Application number: 10158973.7
(22) Date of filing: 01.04.2010
(51) Int. Cl.: G01C 3/14, G01S 11/12, G01S 17/48, H04N 13/00

(54) **Apparatus for detecting three-dimensional distance**

(30) Priority: 10.04.2009 KR 20090031354
(71) Applicant: SiliconFile Technologies Inc., Seoul (KR)
(72) Inventor: Lee, Byoung Su, Jeollanam-do (KR)
(74) Representative: Neobard, William John

(57) **Abstract**

A three-dimensional distance detecting apparatus includes a stereo vision camera configured to detect a parallax of a selected point to be detected; and a pattern generating device configured to generate a pattern and project the pattern on the selected point when the selected point is a subject which does not induce a parallax.

## Description

The present invention relates to the field of distance detection.

An embodiment relates to an apparatus for detecting a three-dimensional distance using stereo cameras. An embodiment relates to an apparatus for detecting a three-dimensional distance, which has a pattern generating device for generating a specified pattern in the case where a selected point of a subject to be detected does not produce a parallax so that precise detection of a distance is made possible.

The development of information communication technology has allowed a digital terminal for processing letters, voices and images at a high speed to provide multimedia service for supporting two-dimensional image and voice. Currently, research for three-dimensional stereoscopic information communication service to render a stereoscopic feeling is being conducted.

In general, stereo pictures for representing a three-dimensional image are realized by the principle of stereo vision through two eyes. An important factor for rendering stereoscopic feeling is a parallax between two eyes, that is, binocular disparity, resulting from the fact that the two eyes of a person are separated by about 65 mm. Therefore, the left and right eyes see different two-dimensional pictures. As these two pictures are transmitted to brain via retinae, the brain combines the two pictures and reproduces the depth and reality of an original three-dimensional image, which is generally called stereography.

Recently, a stereo vision system capable of sensing a distance to a subject in front has been suggested in the art. The stereo vision system employs two stereo cameras which can map a three-dimensional space into a two-dimensional space through perspective transformation, and recovers three-dimensional information from the geometric locations of the stereo cameras.

In a conventional method for acquiring distance information as described above, left image data and right image data are obtained using the two cameras. Then, an edge detection task is performed for each of the thus-obtained two image data, and, by finding matching points, the distance information can be acquired.

However, in the conventional method, when a subject to be detected is a white wall surface or a transparent glass, since characteristic points for inducing a parallax do not exist, it is impossible to precisely detect a distance through simply using the stereography.

Accordingly, the present invention has been made in an effort to solve the problems occurring in the related art.

An embodiment provides an apparatus for detecting a three-dimensional distance, which can precisely detect a distance even when a subject to be detected in the distance thereof is a white wall surface or a transparent glass with no characteristic points for inducing a parallax.

In one aspect there is provided a three-dimensional distance detecting apparatus, comprising a stereo vision camera configured to detect a parallax of a selected point to be detected; and a pattern generating device configured to generate a pattern and project the pattern on the selected point when the selected point is a subject which does not induce a parallax.

The present invention will become more apparent after a reading of the following detailed description taken in conjunction with the drawing, in which:

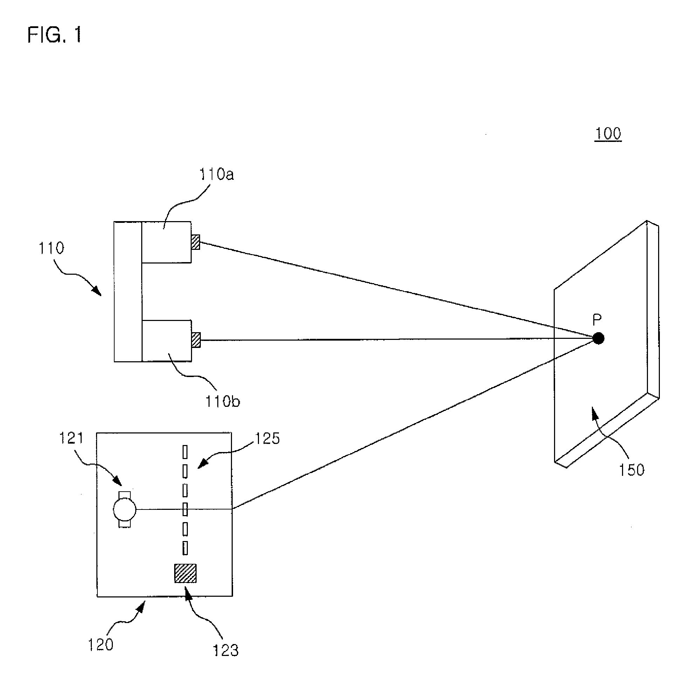

FIG. 1 is a schematic view illustrating an apparatus for detecting a three-dimensional distance in accordance with an embodiment of the present invention.

Referring to FIG. 1, an apparatus for detecting a three-dimensional distance 100 includes a stereo vision camera 110, and a pattern generating device 120 for generating an optional pattern 125.

The stereo vision camera 110 has a reference camera 110a and a comparison camera 110b which are oppositely disposed at a predetermined distance. The reference camera 110a and the comparison camera 110b respectively include CMOS image sensors.

When assuming that the horizontal distance between the image sensors is D and a vertical distance between the image sensor and the lens of the reference camera 110a or the comparison camera 110b is H, as the value of D/H increases, the resolution of depth information increases, whereas the depth segmentation of a distant subject becomes impossible. Conversely, as the value of D/H decreases, the resolution of depth information decreases, whereas the depth segmentation of a distant subject becomes possible.

The pattern generating device 120 includes a light source 121, and a driving unit 123 for generating the optional pattern 125. The light source 121 uses a laser or an light emitting diode (LED) and projects an infrared having a wavelength of 700 nm to 1,000 nm on the subject to be detected. Here, the reason why the infrared of the wavelength is used resides in that a person cannot perceive characteristic points which induce a parallax on a single-colored plane so that distance detection can be performed naturally and in that the infrared of the wavelength has a nature that it reflects from a transparent subject such as a glass.

The driving unit 123 operates to generate the optional pattern 125. For instance, the driving unit 123 can generate a pattern such as a grid, a point, a circle and a rectangle. Also, the driving unit 123 can control not only the shape of the pattern but also the size, the number and the interval of one or more patterns.

Hereafter, a method of detecting a position P of a selected point to be detected on a single surface 150 according to the present invention will be described in detail.

In the case where an entire image is a single-colored wall surface such as a white wall, since a parallax is not induced between two images, a distance cannot be appropriately detected. In this case, the optional pattern 125 is generated by the driving unit 123 of the present invention. Therefore, by projecting the infrared of the wavelength of 700 nm to 1,000 nm on the single plane using the laser or the light emitting diode (LED) of the light source 121, characteristic points, on which a pattern such as a grid, a point, and so forth is formed, are produced, and the distance can be detected using the stereo vision camera 110.

In the case of a transparent subject such as a glass, using the nature that the infrared of the wavelength reflects from the glass, distance detection can be performed in a similar manner to the distance detection on the white wall surface.

If a subject to be detected has characteristic points so that a parallax can be induced, it is not necessary to operate the driving unit 123, and in this case, the distance of the subject can be detected using only the stereo vision camera.

As is apparent from the above description, the present invention provides advantages in that the distance of a selected point to be detected can be precisely recognized even when a subject to be detected is a single-colored wall surface or a transparent glass.

Although an embodiment of the present invention has been described for illustrative purposes, those skilled in the art will appreciate that various modifications, additions and substitutions are possible, without departing from the scope an of the invention as recited in the accompanying claims.

## Claims

1. A three-dimensional distance detecting apparatus, comprising:
a stereo vision camera configured to detect a parallax of a selected point to be detected; and
a pattern generating device configured to generate a pattern and project the pattern on the selected point when the selected point is a subject which does not induce a parallax.

2. The three-dimensional distance detecting apparatus according to claim 1, wherein the pattern generating device comprises a light source and a driving unit for generating the pattern.

3. The three-dimensional distance detecting apparatus according to claim 2, wherein the light source emits light having a wavelength of 700 nm to 1,000 nm using a laser or a light emitting diode.

4. The three-dimensional distance detecting apparatus according to claim 2, wherein the pattern includes any one of a grid, a point, a circle, and a rectangle.

5. The three-dimensional distance detecting apparatus according to claim 2, wherein the driving unit controls a shape, a size, a number and an interval of one or more patterns.

6. The three-dimensional distance detecting apparatus according to claim 1, wherein the stereo vision camera comprises a reference camera and a comparison camera each of which includes a CMOS image sensor.

7. The three-dimensional distance detecting apparatus according to claim 1, wherein the subject is a single-colored wall surface or a transparent subject.
